# EUROPEAN PATENT APPLICATION

(11) **EP 2 546 633 A1**
(43) Date of publication of application: **16.01.2013**
(21) Application number: 11753443.8
(22) Date of filing: 10.03.2011
(51) Int. Cl.: G01N 21/27, G01B 11/06, G01N 5/02, G01N 11/00, G01N 21/45

(54) **LAMINATED STRUCTURE FOR MEASUREMENT OF INTENSITY OF REFLECTED LIGHT, DEVICE EQUIPPED WITH LAMINATED STRUCTURE FOR MEASUREMENT OF REFLECTED LIGHT, AND METHOD FOR DETERMINATION OF THICKNESS AND/OR MASS AND/OR VISCOSITY OF THIN FILM**

(30) Priority: 10.03.2010 JP 2010053556
(71) Applicant: Tokyo Institute of Technology, Tokyo 152-8550 (JP)
(72) Inventor: KAWASAKI, Takayoshi, Yokohama-shi Kanagawa 226-8503 (JP); OKAHATA, Yoshio, Yokohama-shi Kanagawa 226-8503 (JP)
(74) Representative: Fritsche, Daniel
(86) International application number: PCT/JP2011/055672
(87) International publication number: WO 2011/111785

(57) **Abstract**

The present invention provides a laminated structure for measuring reflected light intensity able to measure the thickness of a surface adsorbed film with high sensitivity by a simple optical technique.

Provided are a laminated structure for measuring reflected light intensity at at least one wavelength that comprises a valve metal optical interference layer, and a method for measuring film thickness and/or mass and/or viscosity of a thin film targeted for measurement by radiating light onto the thin film targeted for measurement and measuring a change in reflected light intensity at at least one wavelength in a measurement medium in this laminated structure for measuring reflected light intensity.

## Description

### TECHNICAL FIELD

The present invention relates to a laminated structure for measuring reflected light intensity, a device containing a laminated structure for measuring reflected light intensity, and a method for measuring film thickness and/or mass and/or viscosity of a thin film.

### BACKGROUND ART

Numerous types of methods are known for optically measuring film thickness of an adsorbed film on a surface. For example, a method utilizing surface plasmon resonance is applied over a wide range in molecular recognition and reflection analysis devices using a surface for chemical sensors and biometrics. However, since this method presents optical difficulties in terms of handling since it detects changes in resonance angle, it is unable to simultaneously measure dynamic thin film properties by combining with a quartz vibrator.

In addition, a method that utilizes interference of white light is known as a method for measuring film thickness of a thin film present on a substrate having high optical reflectance. Since reflected light at a thin film surface and reflected light at the interface between the thin film and the substrate mutually interfere, reflected light intensity varies cyclically dependent upon the wavelength. By theoretically fitting the fringe pattern thereof, film thickness can be measured optically on the nanometer to millimeter order. This is referred to as the optical interference film thickness measurement method, interference enhanced reflection method (IER) or reflection spectrum film thickness measurement method.

However, in cases in which the difference in refractive index is large relative to the medium or film thickness is small, it is necessary to measure interference fringes over a wide wavelength range extending from the ultraviolet to infrared range and apply a function by calculation in order to measure with high accuracy, and the resulting device becomes quite extensive in order to carry out processing properly. In addition, these methods primarily use transparent substrates, require light to enter from a reflecting surface of a layer that causes interference to obtain an interference spectrum, and opaque substrates cannot be used. Conversely, although there are also methods that form an interference layer of silicon nitride on a silicon substrate for use as the substrate used to measure light enters from the side of the interference layer, and measure adsorption of a thin film thereto as a change in the interference spectrum, fabrication of the silicon nitride layer requires the use of a vapor deposition device, thereby causing this method to lack versatility. For example, in the case a solution to be measured absorbs light, this solution ends up impairing measurement. Although it is necessary to control the film thickness of the interference layer in order to avoid this, this is not easy for the person carrying out measurements.

An even simpler method involves the use of the anomalous reflection of gold that is easily combined with other methods. This method utilizes that fact that when a substance is adsorbed to the surface of gold, the reflectance of light of a wavelength extending from the near ultraviolet range to the ultraviolet range decreases comparatively greatly corresponding to the amount of the substance, and although its application is being studied for use as a new technique for quantifying the amount of a substance adsorbed to a surface, the amount of the change in reflectance is actually near the detection limit of existing devices.

In addition, although the use of a highly sensitive assay has been proposed by providing a two-dimensional lattice containing a material having a high refractive index on a substrate (having, for example, a period of about 0.01 µm to 1 µm and depth of about 0.01 µm to 1 µm, the use of a two-dimensional lattice results in problems in terms of ease of fabrication and costs.

### Prior Art Documents

### Patent Documents

Patent Document 1: Japanese Unexamined Patent Publication No. 2009-25312

### SUMMARY OF THE INVENTION

### Problems to be Solved by the Invention

The present invention provides a laminated structure for measuring reflected light intensity that is able to solve the aforementioned problems and measure thickness of a film adsorbed to a surface with higher sensitivity by a simple optical technique.

Namely, the present invention relates to a novel interface substrate for optically measuring film thickness of a substance adsorbed to a surface with the aim of being applied to a chemical sensor, biosensor and the like, wherein 1) a substrate is used that has good reflectance to enable measurement from a sample side for the purpose of constructing a simpler optical system, 2) an interference layer formed on the substrate has a comparatively high refractive index and uses a substance and molding method that enable arbitrary control of film thickness, 3) a substrate is used that has a surface such that regeneration treatment can be carried out easily to enable repetitive measurement, and 4) the surface is smooth to allow combination with a quartz vibrator.
Thus, an interference substrate is provided that solves the aforementioned problems while also enabling optical measurement with high sensitivity.

### Means for Solving the Problems

The present invention provides the following inventions in order to solve the aforementioned problems.
(1) A laminated structure for measuring reflected light intensity at at least one wavelength that comprises a valve metal optical interference layer.
(2) The laminated structure for measuring reflected light intensity described in (1), wherein the valve metal is a metal selected from the group consisting of titanium, aluminum, chromium and stainless steel.
(3) The laminated structure for measuring reflected light intensity described in (1) or (2), wherein the valve metal is a plate or thin film.
(4) The laminated structure for measuring reflected light intensity described in any of (1) to (3), wherein a passive thin film is formed on the surface of the valve metal by oxidation of the valve metal.
(5) The laminated structure for measuring reflected light intensity described in (4), wherein the oxidation is anodic oxidation.
(6) The laminated structure for measuring reflected light intensity described in (4) or (5), wherein the film thickness of the passive thin film is 5 nm to 0.1 mm.
(7) The laminated structure for measuring reflected light intensity described in any of (1) to (6), wherein the thickness of the valve metal is 400 nm to 2 mm.
(8) The laminated structure for measuring reflected light intensity described in any of (3) to (7), wherein the thin film is formed by deposition or sputtering.
(9) The laminated structure for measuring reflected light intensity described in any of (3) to (8), wherein the thin film is formed on a metal electrode of a quartz vibrator.
(10) The laminated structure for measuring reflected light intensity described in any of (4) to (9), wherein a thin film targeted for measurement is further adsorbed on the passive thin film.
(11) The laminated structure for measuring reflected light intensity described in described in (10), wherein the thin film targeted for measurement is selected from proteins, nucleic acids, sugar chains, lipids, synthetic polymer compounds and low molecular weight compounds.
(12) A method for measuring film thickness and/or mass of a thin film targeted for measurement by radiating light onto the laminated structure for measuring reflected light intensity described in (10) or (11) installed in a measurement medium and measuring a change in reflected light intensity at at least one wavelength from the laminated structure for measuring reflected light intensity.
(13) A device for measuring reflected light intensity, provided with a laminated structure for measuring reflected light intensity at at least one wavelength comprising a valve metal interference layer, a cell housing the laminated structure for measuring reflected light intensity, a light source, light radiating means for radiating light from the light source onto the laminated structure for measuring reflected light intensity, and detecting means for detecting intensity of light reflected from the laminated structure for measuring reflected light intensity at at least one wavelength.
(14) A sensor chip, provided with a laminated structure for measuring reflected light intensity at at least one wavelength comprising a valve metal interference layer and a metal electrode of a quartz vibrator.
(15) A quartz vibrator microbalancing device, provided with the sensor chip described in (14), an oscillation circuit connected to a metal electrode of the sensor chip, and means for detecting a resonance frequency of a quartz vibrator provided in the sensor chip.
(16) A device comprising the combination of the device for measuring reflected light intensity described in (13) and the quartz vibrator microbalancing device described in (15), wherein the laminated structure for measuring reflected light intensity is used to measure both reflected light intensity at at least one wavelength and quartz vibrator microbalance.
(17) A method for measuring viscosity, comprising: measuring reflected light intensity at at least one wavelength and measuring quartz vibrator microbalance using a laminated structure for measuring reflected light intensity at at least one wavelength comprising a valve metal interference layer, wherein viscosity of a thin film targeted for measurement on the laminated structure for measuring reflected light intensity is measured based on the relationship between the resulting measured value of reflected light intensity and the measured value of quartz vibrator microbalance.

### Effects of the Invention

The present invention is able to provide a laminated structure for measuring reflected light intensity able to measure the thickness of a surface adsorbed film with high sensitivity by a simple optical technique.

### BRIEF DESCRIPTION OF THE DRAWINGS

FIG. 1 is a drawing showing changes in reflection spectra in Example 1.
FIG. 2(a) is a drawing showing an overview of an experiment in Example 3, FIG. 2(b) is a drawing showing the results of simulating changes in reflection spectra, and FIG. 2(c) indicates reflection spectra.
FIGS. 3(a) and 3(b) are drawings respectively showing changes in reflectance at titanium oxide film thicknesses of 35 nm and 55 nm in Example 4, and FIG. 3(c) indicates the reflection spectrum at a titanium oxide film thickness of 55 nm.
FIG. 4 is a drawing showing changes in frequency and changes in reflectance in Example 5.
FIG. 5 is a drawing showing frequency changes in Example 6.
FIG. 6 is a drawing showing reflectance changes in Example 7.

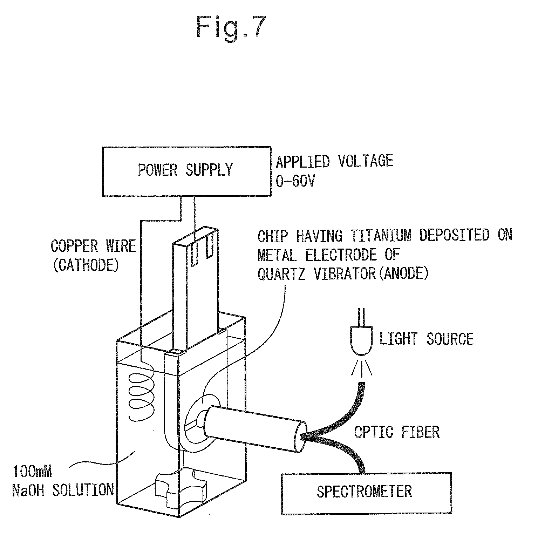

FIG. 7 is a drawing depicting anodic oxidation of titanium deposited on a gold electrode of a quartz vibrator.

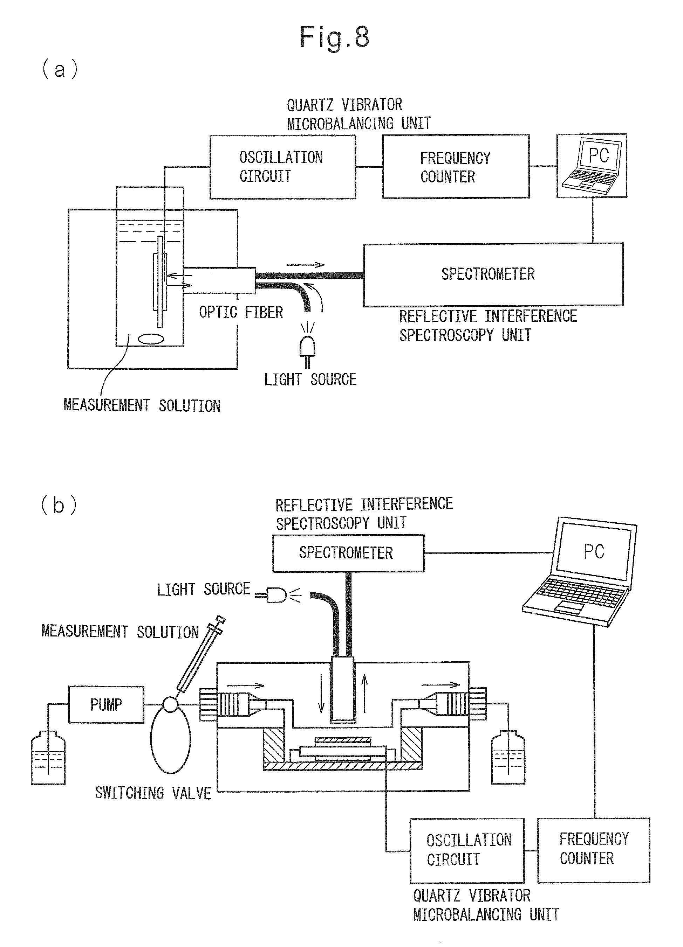

FIG. 8(a) is a drawing showing a device for simultaneous batch measurement of quartz vibrator-reflected light spectrum, and FIG. 8(b) is a drawing of a device for simultaneous flow measurement of quartz vibrator-optical reflection spectrum, as embodiments of the present invention.
FIG. 9 is a drawing indicating the relationship changes in reflectance and relative humidity when a quartz vibrator is switched on and off.
FIG. 10 is a drawing indicating differences in the correlation between a quartz vibrator and changes in optical reflection attributable to the use of different proteins.

### EMBODIMENTS OF THE INVENTION

The laminated structure for measuring reflected light intensity of the present invention comprises a valve metal interference layer.

A valve metal is a metal that allows the formation of a passive thin film on the surface thereof, and in the present invention, the use a valve metal selected from the group consisting of titanium, aluminum, chromium and stainless steel, and particularly titanium, is optically preferable.

In the present description, an "optical interference layer" refers to a layer laminated on the surface of a valve metal that has a refractive index differing from that of the valve metal and causes interference of light reflected from the valve metal.

In the present description, the term "laminated" of the laminated structure refers to an optical interference layer being laminated on a valve metal. In addition, the optical interference layer may further contain a laminated structure.

In the present description, the phrase "reflected light intensity at at least one wavelength" refers to the intensity of light reflected from light radiated onto the laminated structure of the present invention, and this reflected light may be measured directly, or may be measured after diffracting using a diffraction grating, prism or band pass filter. The reflected light is preferably measured after diffracting. Examples of measuring reflected light after diffracting include spectral measurement and measurement at at least one specific wavelength.

The following provides an explanation of typical examples of the present invention while focusing on the case of titanium metal.

Although an ordinary oxidation method such as chemical treatment or UV ozone treatment can be employed to form a passive thin film such as a titanium oxide layer, anodic oxidation is used preferably. The thickness of the passive thin film can be easily controlled according to oxidation potential and oxidation time by a known method. Although the film thickness of a thin film such as that of titanium oxide can be suitably determined in consideration of, for example, the reflectance of the liquid or other measurement medium used, it is normally about 5 nm to 0.1 mm, and may be within a range in which the lower limit value thereof is arbitrarily selected from the group consisting of, for example, 5 nm, 6 nm, 7 nm, 8 nm, 9 nm, 10 nm, 15 nm and 20 nm, and the upper limit value thereof is arbitrarily selected from the group consisting of 0.1 mm (100 µm), 10 µm, 1 µm, 800 nm and 500 nm.

A plate-like bulk substrate or thin film is used for the valve metal such as titanium metal. The thickness of the valve metal is about 400 nm to 2 mm, preferably 500 nm to 1.5 mm and more preferably 700 nm to 1 mm, and in the case of using a thin film of titanium metal and the like, a thin film is formed on various non-metal or metal substrates. Examples of non-metal substrates used include those composed of glass, polystyrene, polyethylene terephthalate, polycarbonate, silicon or quartz. Although there are no particular limitations on the thickness of the substrate on which the titanium metal thin film is formed, it is normally about 0.1 mm to 2 mm.

Formation of a thin film of the valve metal such as titanium metal can be carried out in accordance with ordinary methods, and although examples of such methods include sputtering, vapor deposition, ion plating, electroplating and electroless plating, sputtering or vapor deposition is preferable since it allows the formation of a uniform film.

Base materials differing from valve metal can also be used as a surface for optically measuring film thickness and/or mass by depositing a valve metal such as titanium metal on various surfaces. For example, by simultaneously carrying out quartz vibrator microbalancing and measurement of film thickness using the anomalous reflection of gold, a technique has been developed for analyzing the amount of an adsorbed substance and its dynamic properties based on the difference between the values obtained from these two measurement methods. The present invention can also be applied for this purpose. Namely, by depositing titanium metal on a quartz vibrator electrode and forming a titanium oxide thin film by subjecting to, for example, anodic oxidation, measurement of film thickness using the resulting optical interference can be carried out simultaneous to measurement of changes in frequency of the quartz vibrator.

During measurement of reflected light intensity, the film thickness of a thin film or its mass from the density thereof is measured by further adsorbing a thin film targeted for measurement onto the passive thin film such as a titanium oxide thin film, radiating light onto the thin film targeted for measurement, and measuring the change in reflected light intensity at at least one wavelength (the change in the interference shift, namely the change in the optical reflection spectrum, or change in reflected light intensity at at least one wavelength).

Although there are no particular limitations on the thin film targeted for measurement provided it is easily adsorbed onto the surface of the passive thin film such as a titanium oxide thin film and is composed of a material that differs from that of the measurement medium, it is preferably selected from organic substances such as proteins, nucleic acids, sugar chains, lipid or synthetic polymers, and low molecular weight compounds such as water, alcohols such as ethanol or ketones such as acetone.

For example, a titanium oxide thin film is preferably formed by anodic oxidation after having laminated a titanium metal thin film on the surface of a metal electrode of a quartz vibrator by vapor deposition or sputtering, light is radiated onto the surface thereof, and protein is adsorbed while measuring reflection spectrum in the measurement medium or reflected light intensity at at least one specific wavelength. Although frequency decreases when the protein adsorbs onto the surface of the quartz vibrator, the reflection spectrum or the reflected light intensity at at least one specific wavelength change considerably in response to this change, thereby achieving highly sensitivity measurement. In this manner, the film thickness and/or mass of a thin film targeted for measurement can be measured by measuring the change in the reflection spectrum in the measurement medium or the change in reflected light intensity at at least one specific wavelength. The measurement method per se using a quartz vibrator can be carried out in accordance with an ordinary quartz vibrator microbalancing method. In this case, optical measurement and surface analysis with the quartz vibrator can be carried out simultaneously, and measurements relating to viscoelasticity of the adsorbed thin film can also be carried out.

Either a gas such as air or a liquid such as water may be used for the aforementioned measurement medium.

In the present invention, in further providing an explanation of measurement of a substance adsorbed to the surface of a titanium oxide thin film, the laminated structure for measuring reflected light intensity of the present invention is inserted into a cell, for example, and light is radiated onto the surface of the titanium oxide thin film by passing through an optic fiber and the like from outside the cell followed by measurement of reflected light intensity. Since the reflection spectrum or reflected light intensity at at least one specific wavelength changes accompanying adsorption of a substance onto the surface of the titanium oxide thin film from a gaseous phase or liquid phase within the cell, this change is measured. The change in reflection spectrum or reflected light intensity at at least one specific wavelength when the film thickness of an adsorbed substance has changed corresponding to the thickness of the titanium oxide thin film can be simulated theoretically, and if white light is used as a light source and a spectrometer is used as a photodetector, the reflection spectrum can be observed directly, thereby making it possible to measure film thickness by either theoretically fitting the entire spectra or monitoring the amount of change at at least one specific wavelength. More simply, in the case of using a monochromatic light source, film thickness can be determined from the change in reflected light intensity at the wavelength of that light source.

In addition, the present invention utilizes optical interference to enable changes in the reflection spectrum or changes in reflected light intensity at at least one specific wavelength to actually appear in the form of an interference fringe shift. In other words, when reflected light intensity at a certain specific wavelength is monitored, there is a wavelength at which reflected light intensity increases accompanying adsorption of a substance and a wavelength at which it decreases. By then taking the difference between the changes at the two wavelengths having different phases, monitoring can be carried out by offsetting noise derived from optics such as light source modulation and amplifying optical response.

Although not intended to be limiting, measurement of the reflection spectrum is suitable in the case of measuring a measurement target having a comparatively large film thickness (for example, 10 nm to 1 µm) such as in the case of proteins or synthetic polymers, while measurement at at least one specific wavelength, such as 1 wavelength, 2 wavelengths, 3 wavelengths, 4 wavelengths, 5 wavelengths or 10 wavelengths, is suitable in the case of measuring a measurement target having a comparatively small film thickness (for example, 10 nm or less) such as in the case of low molecular weight compounds. However, selection of whether measurement of reflection spectrum or measurement at at least one specific wavelength is to be used is dependent on the properties of the measurement target and the objective of measurement.

In addition, titanium oxide is known to have an action that causes organic substances adhered thereto to undergo photodecomposition by ultraviolet light, and the development of applications thereof has progressed in recent years. By utilizing this action in the laminated structure for measuring reflected light intensity of the present invention, once measurement has been completed, adsorbed films can be easily removed by irradiating with ultraviolet light, thereby enabling the laminated structure for measurement to be easily regenerated and reused.

In one embodiment of the present invention, plate-like metal titanium is subjected to anodic oxidation and a titanium oxide thin film is deposited on the surface thereof. In contrast, when a protein adsorption experiment was carried out in an aqueous phase system, the amount of adsorbed protein was able to be monitored at an arbitrary wavelength from 450 nm to 750 nm by controlling the film thickness of the titanium oxide thin film. As a result, even in cases of light absorption in a solution, an adsorbed substance can be measured by avoiding that wavelength. In addition, the amount of change in optical absorbance accompanying adsorption of protein or lipid films improves about ten-fold in comparison with conventional anomalous reflection of gold.

In addition, the present invention also relates to a device for measuring reflected light intensity provided with a laminated structure for measuring intensity of reflected light at at least one wavelength comprising a valve metal optical interference layer, a cell housing the laminated structure for measuring reflected light intensity, a light source, light radiating means for radiating light from the light source onto the laminated structure for measuring reflected light intensity, and detecting means for detecting intensity of light reflected from the laminated structure for measuring reflected light intensity at at least one wavelength.
The cell may be any such cell provided it is normally used for optical measurements. The light radiating means for radiating light from the light source may radiate white light from a high-pressure mercury lamp, deuterium lamp, xenon lamp or white LED and the like, or colored light from a monochromatic LED or laser and the like, while examples of the detecting means for detecting reflected light intensity include a spectrometer, photodiode and photoresistor. In addition, the laminated structure for measuring reflected light intensity and the cell can be removably provided in the device for measuring reflected light intensity of the present invention.

Moreover, on another embodiment of the present invention, the present invention can be used without problem as a quartz vibrator and reflected light measurement method by depositing titanium metal on a gold electrode of a quartz vibrator and further fabricating a titanium oxide thin film, and information on viscoelasticity of an adsorbed substance can be obtained by simultaneously measuring with these two measurement methods.

In addition, the present invention also relates to a sensor chip provided with a laminated structure for measuring reflected light intensity at at least one wavelength comprising a valve metal interference layer, and a metal electrode of a quartz vibrator. This sensor chip may be of any form suitable for measuring by quartz vibrator microbalance, may be used for, for example, batch measurement or flow measurement, and may be used in an open system or closed system. The sensor chip can be used repeatedly by employing a regeneration method as previously described.

In addition, the present invention also relates to a quartz vibrator microbalancing device provided with the aforementioned sensor chip, an oscillation circuit connected to a metal electrode of the sensor chip, and means for detecting the resonance frequency of the quartz vibrator provided in the sensor chip. This quartz vibrator microbalancing device may employ any normally used measurement process such as batch measurement or flow measurement. In addition, the laminated structure for measuring reflected light intensity or the sensor chip can be removably provided in the quartz vibrator microbalancing device of the present invention.

In addition, the present invention also relates to a device comprising the combination of the aforementioned device for measuring reflected light intensity and the aforementioned quartz vibrator microbalancing device, wherein the laminated structure for measuring reflected light intensity is used to measure both reflected light intensity at at least one wavelength and quartz vibrator microbalance. Reflected light intensity and quartz vibrator microbalance may be measured simultaneously or separately. In addition, the laminated structure for measuring reflected light intensity or the sensor chip can be removably provided in this device.

In addition, measurements can be repeated since the same surface can be regenerated by decomposing adsorbed organic substances with UV ozone treatment.

In addition, changes in reflected light intensity resulting from absorption and desorption of ethanol in a gaseous phase system are about ten-times larger and sensitivity is improved by a factor of ten in comparison with the gold anomalous reflection method capable of quantifying the amount of substance adsorbed onto a surface with a similar measurement device. By combining with a quartz vibrator, elimination of adsorbed molecules due to vibration of the quartz vibrator can be detected with high sensitivity, and this can also be used to measure humidity in the atmosphere.

In addition, the viscosity of a thin film targeted for measurement on the laminated structure for measuring reflected light intensity can also be measured based on the relationship between measured values of reflected light intensity and measured values of quartz vibrator microbalance. The inventor of the present invention found that, in the case the thin film targeted for measurement consists of protein, when the relationship between measured values of reflected light intensity and quartz vibrator microbalance are plotted on a graph, the plot can be fit using the Huggins equation that expresses the relationship between polymer concentration and solution viscosity. Although the intrinsic viscosity of a polymer is normally obtained from this equation, the parameter corresponding to intrinsic viscosity obtained by fitting the protein plot obtained according to the measurement method of the present invention was determined to demonstrate a high correlation with the compressibility coefficient of each protein measured with a different method. Accordingly, the intrinsic viscosity of a thin film targeted for measurement adsorbed onto a surface can be said to be able to be measured from the relationship between measured values of reflected light intensity and quartz vibrator microbalance obtained according to the measurement method of the present invention.

### Examples

### Example 1 (TiO₂/Ti Surface Preparation Method 1)

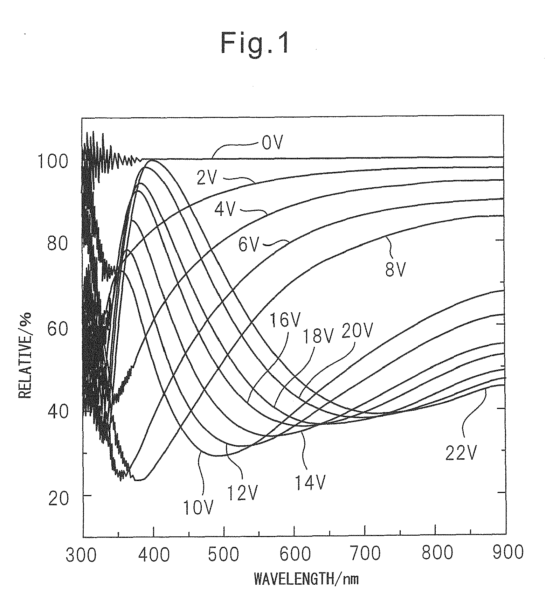

After polishing a titanium plate measuring 40 mm x 8 mm × 2 mm with an abrasive, the plate was cleaned with water and acetone. After allowing to air dry, the plate was immersed in 6 ml of 100 mM NaOH solution contained in a glass cell, followed by connecting to the anode of the 2400 Source Meter manufactured by Keyence Corp. The cathode was connected to a copper wire and immersed in the same cell while preventing contact with the titanium plate. A constant electric potential was applied thereto from 0 V to 22 V. At this time, the optical spectrum of light reflected from the surface of the titanium plate was monitored using an optic fiber-type reflection spectrometer (USB4000, Ocean Optics Inc.). The resulting reflection spectra obtained varied according to the applied electric potential, and the color of the surface changed from gold to red, blue and violet tones. The results are shown in FIG. 1. This change was determined to correspond to a change in film thickness of a TiO₂ thin film from about 0 nm to 60 nm on the basis of simulation results.

### Example 2 (TiO₂/Ti Surface Preparation Method 2)

Titanium was deposited to a thickness of 700 nm on the surface of one side of a quartz plate of a ceramic molded quartz vibrator chip (Ulvac Corp., quartz plate diameter: 9 mm, gold electrode diameter: 3 mm). This chip was immersed in 6 ml of 100 mM NaOH solution contained in glass cell, and the electrode on the solution side deposited with titanium was connected to the anode of the 2400 Source Meter manufactured by Keyence Corp. The cathode was connected to a copper wire and immersed in the same cell while preventing contact with the titanium surface. An electric potential of 12 V was applied thereto. At this time, the optical spectrum of light reflected from the titanium surface was monitored using an optic fiber-type reflection spectrometer (USB4000, Ocean Optics Inc.). The titanium surface took on a violet color, and a titanium oxide layer of about 35 nm was formed based on simulation results of the reflection spectrum. Simultaneous to measurement of the reflection spectrum, this chip was also able to be used as chip employing the quartz vibrator microbalancing method by stably vibrating as a vibrator in water.

### Example 3 (Protein Binding to TiO₂/Ti Surface 1)

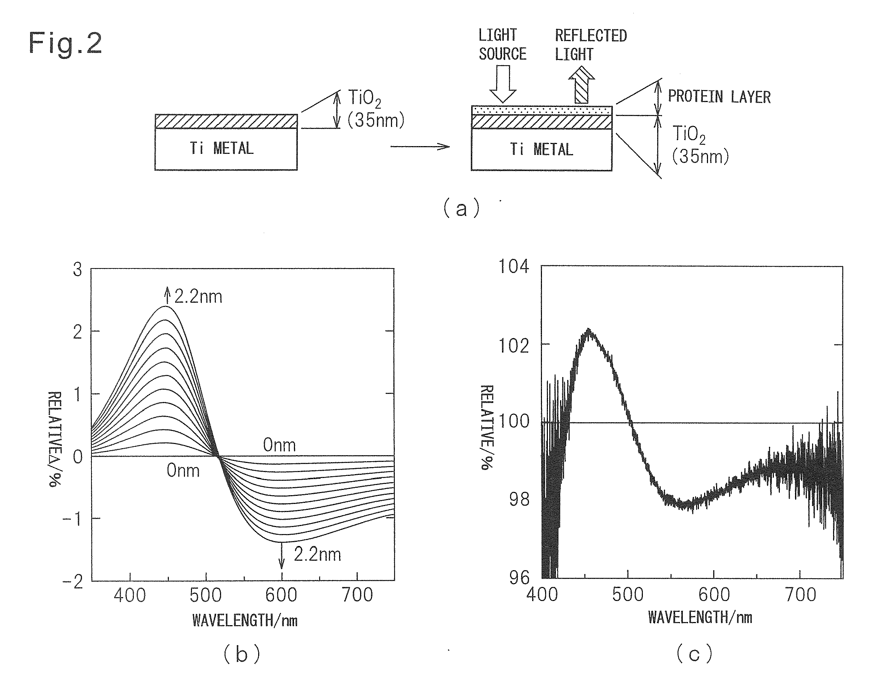

The titanium plate for forming a 35 nm TiO₂ thin film indicated in Example 1 was immersed in 5 ml of pure water and stabilized by adding 100 ml of 40 mM acetic acid. Taking this state to constitute an initial state, 100 ml of a 1 mg/ml solution of bovine serum albumin (BSA) were added thereto. The final reflection spectrum is shown in FIG. 2(c), and can be understood from the simulation results of FIG. 2(b), protein was determined to have been adsorbed to an average film thickness of about 2 nm. Monitoring a wavelength that resulted in a large change over time was determined to enable direct observation of the adsorption process. An overview of the experiment is shown in FIG. 2(a).

### Example 4 (Protein Binding to TiO₂/Ti Surface 2)

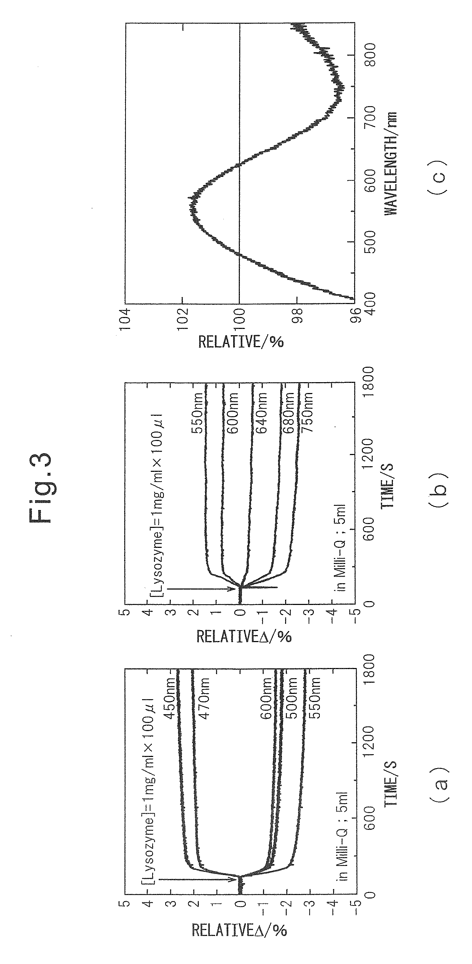

The titanium plates for forming 35 nm and 55 nm TiO₂ thin films indicated in Example 1 were each immersed in 5 ml of pure water. Taking this state to constitute an initial state, 100 ml of a 1 mg/ml solution of lysozyme were added thereto. Changes in reflectance were monitored at each wavelength. As shown in FIG. 3, reflectance at each wavelength fluctuates with lysozyme adsorption corresponding to the titanium oxide layer. The direction of the increase or decrease of the change is attributable to a shift in phase corresponding to the titanium oxide layer, and this can be arbitrarily and easily controlled according to conditions during formation of the titanium oxide layer. Thus, binding of the same protein can be simultaneously measured at multiple wavelengths. Using the difference between wavelengths of different phases makes it possible to increase the size of the response and offset noise attributable to the optics. What is more important is that, in the case the solution absorbs light, measurement can be carried out while avoiding the wavelength at which light is absorbed.

### Example 5 (Protein Binding to Surface of Quartz Vibrator Chip Deposited with 700 nm Titanium Metal Forming 35 nm TiO₂ Thin Film 3)

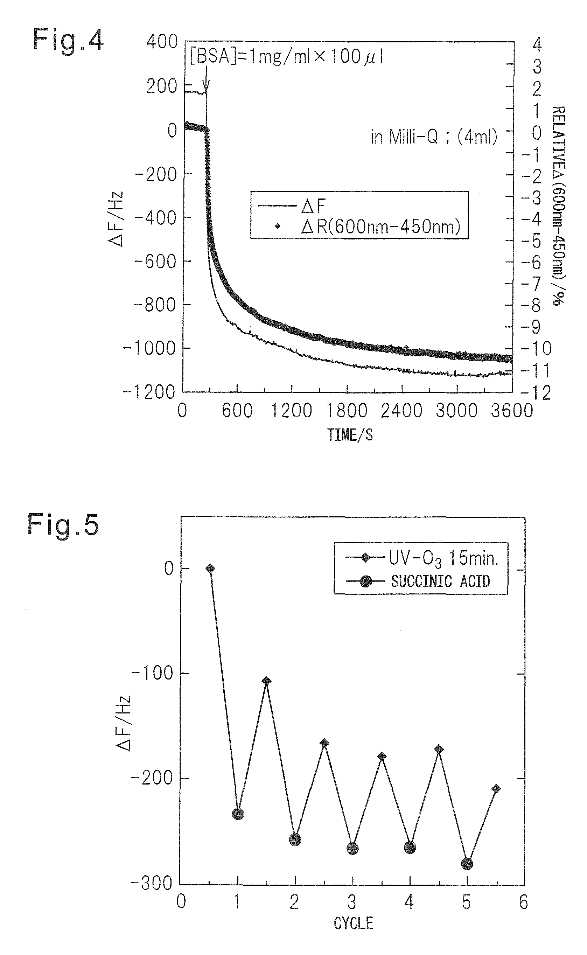

The quartz vibrator chip deposited with 700 nm of titanium metal forming a 35 nm TiO₂ thin film indicated in Example 2 was attached to an oscillation circuit and immersed in 4 ml of pure water. Taking this state to constitute an initial state, 100 ml of 1 mg/ml solution of bovine serum albumin (BSA) were then added thereto. Changes in reflectance were monitored at 450 nm and 600 nm. Changes in frequency of the quartz vibrator were also monitored simultaneously. As shown in FIG. 4, differences between decreases in frequency and changes in reflectance at 450 nm and 600 nm were similarly observed, thereby indicating that these measurement methods employing two different principles can be carried out simultaneously. Moreover, according to the results of evaluations employing a conventional combination of a quartz vibrator and gold anomalous reflection, in contrast to the change in reflectance attributable to the anomalous reflection of gold being only about 1% for bonding of the same BSA to a surface in water when the change in frequency of the quartz vibrator was 1000 Hz, in the method of the present invention, a response of 11% was obtained, thus demonstrating a ten-fold improvement in the size of the response.

### Example 6 (Binding of Succinic Acid to Surface of Quartz Vibrator Chip Deposited with 700 nm Titanium Metal Forming TiO₂ Thin Film and Removal by UV Ozone Treatment)

The quartz vibrator chip deposited with 700 nm of titanium metal forming a TiO₂ thin film indicated in Example 2 was attached to an oscillation circuit, and after measuring the initial resonance frequency, was immersed in 4 ml of pure water. 100 ml of 20 mM aqueous succinic acid solution were added to the water and once the changes in frequency had stabilized, the chip was lifted out into a gaseous phase followed by measurement of frequency after allowing to completely dry. Moreover, this chip was subjected to UV ozone treatment for 15 minutes followed again by measurement of frequency. This procedure was repeated five times (FIG. 5). Roughly one layer of the succinic acid in the water was determined to have bound to the surface of the titanium oxide, and was determined to be removed by UV ozone treatment. The reason for the slight overall decrease in frequency, namely the increase in weight, due to repeating UV ozone treatment is thought to be due to a small amount of the titanium metal layer having been oxidized by the UV ozone treatment.

### Example 7 (Adsorption of Ethanol in Gaseous Phase to Surface of Quartz Vibrator Chip Deposited with 700 nm Titanium Metal Forming 35 nm TiO₂ Thin Film and Vibration Effect of Quartz Vibrator)

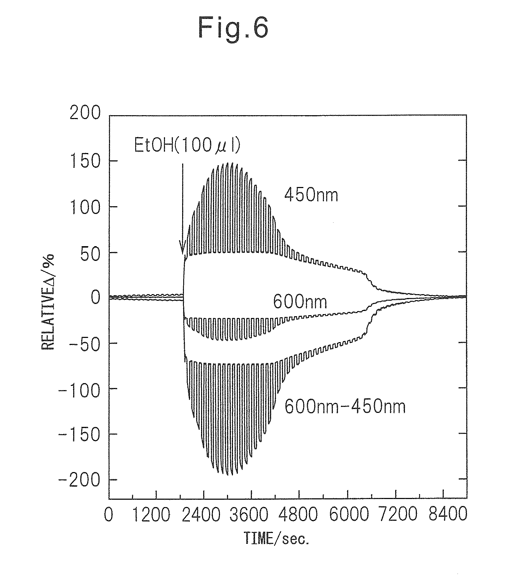

The quartz vibrator chip deposited with 700 nm of titanium metal forming a 35 nm TiO₂ thin film indicated in Example 2 was attached to an oscillation circuit and then placed in an empty 8 ml glass cell furnished with filter paper. Optical reflectance was measured while repeatedly switching vibration of the quartz vibrator on and off at 1 minute intervals. 100 ml of ethanol were placed in the cell after a fixed amount of time. The process consisting of generation of ethanol vapor within the cell, adsorption of ethanol from the gaseous phase to the surface of the titanium oxide, and elimination of the ethanol from the surface of the titanium oxide after all of the ethanol introduced into the cell had eventually evaporated was able to be confirmed from the change in reflectance (FIG. 6). This change was roughly six times the change in reflectance obtained by conventional anomalous reflection of gold. Moreover, reflectance was also determined to change considerably depending on the presence or absence of quartz vibrator vibration. This indicates that more than half of the ethanol adsorbed to the surface was eliminated by vibration of the quartz vibrator. The amount of ethanol eliminated by this vibration and the dynamic properties thereof changed according to such factors as the amount of adsorbing molecules and their affinity for the surface. Accordingly, by using a device that combines a quartz vibrator and an optical reflection method, the potential was demonstrated for being able to obtain information relating to vapor molecules in the gaseous phase by utilizing the effect of the presence or absence of vibration.

### Example 8 (Correlation between Relative Humidity and Quartz Vibrator-Optical Reflection Measurement Response Values)

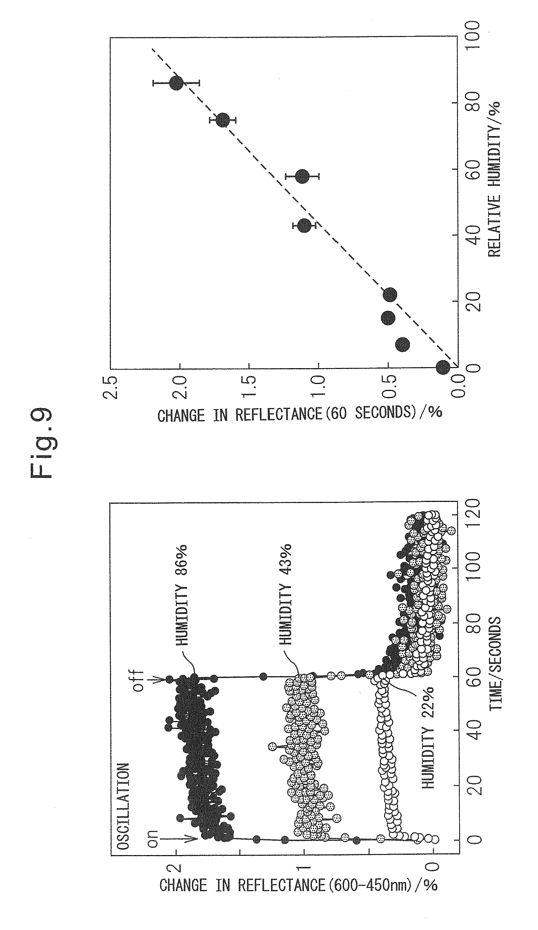

The quartz vibrator chip deposited with 700 nm of titanium metal forming a 35 nm TiO₂ thin film indicated in Example 2 was attached to an oscillation circuit and placed in an 8 ml glass cell containing concentrated sulfuric acid (0%) or various types of saturated salt solutions (values in parentheses indicate relative humidity: lithium bromide (7%), phosphoric acid (9%), lithium chloride (15%), potassium acetate (22%), potassium carbonate (43%), sodium bromide (58%), sodium chloride (75%), sodium acetate (76%), potassium chloride (86%) and sodium hydrogen phosphate (95%)) while preventing contact with the aqueous solution. After allowing to reach equilibrium, optical reflectance was measured while repeatedly switching vibration of the quartz vibrator on and off at one minute intervals. When vibration of the quartz vibrator was switched on, a decrease occurred in the film thickness of the adsorbed moisture based on the resulting optical measurements, and when vibration was switched off, the film returned to the original film thickness (left side of FIG. 9). This difference in optical film thickness resulting from switching vibration on and off is dependent on the type of salt of the saturated aqueous solution used, and is thought to be attributable to a difference in relative humidity. As shown on the right side of FIG. 9, this relative humidity demonstrates a favorable correlation with the reduction in thickness of the film eliminated by vibration of the adsorbed moisture layer on the surface. In other words, the amount of moisture adsorbed to a surface that is eliminated by mechanical vibration can be determined by the reflective interference spectroscopy method using a surface according to the present invention, and this can be used to measure relative humidity.

### Example 9 (Measurement of Viscosity)

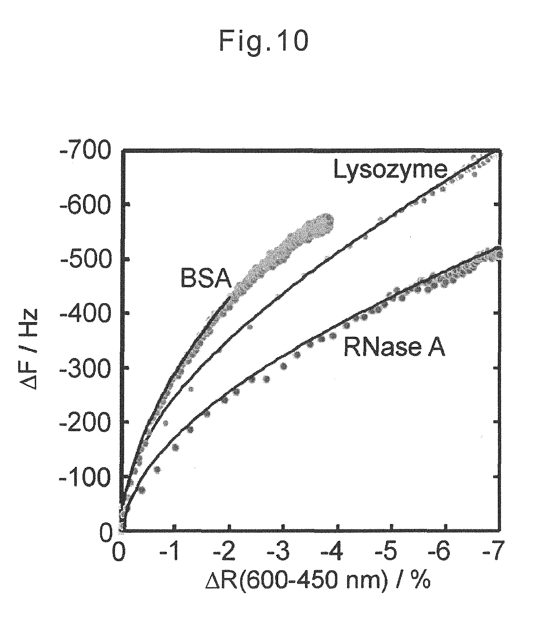

An experiment similar to observing the process of binding of BSA to a surface using two methods based on changes in reflectance and changes in the frequency of a quartz vibrator in Example 5 was carried out in the same manner for lysozyme and RNase A. The difference in changes in reflectance at this time (optical film thickness = absolute amount of protein bound to surface) is plotted on horizontal axis, while changes in frequency of the quartz vibrator are plotted on the vertical axis (FIG. 10). If changes in frequency of the quartz vibrator are measured as the absolute amount of a substance bound to a surface as has been stated thus far, then the amount of the change as determined by the two methods ought to change linearly, and ought to have the same slope regardless of the type of protein. However, as is clear from FIG. 10, the magnitude of the resulting curves varied according to the type of protein and demonstrated a saturated response. These curves were able to be fit according to the Huggins equation that formularizes the concentration dependency of a two-dimensional liquid in the vicinity of a surface (refers to the curves in the drawing). In other words, this behavior can be easily understood when considering that changes in frequency of a quartz vibrator monitor the viscosity of a protein solution of a two-dimensional liquid in the vicinity of a surface. A parameter corresponding to intrinsic viscosity in the Huggins equation obtained as a result of this curve fitting can be obtained from this graph, and the magnitude thereof was determined to demonstrate a favorable correlation with existing protein viscoelasticity parameters. Accordingly, simultaneous measurement of changes in optical reflectance and changes in frequency can be said to be used to evaluate dynamic properties unique to proteins.

### INDUSTRIAL APPLICABILITY

According to the present invention, the thickness of a film adsorbed to a surface and the like can be measured with high sensitivity by a simple, optical technique.

## Claims

1. A laminated structure for measuring reflected light intensity at at least one wavelength that comprises a valve metal optical interference layer.

2. The laminated structure for measuring reflected light intensity according to claim 1, wherein the valve metal is a metal selected from the group consisting of titanium, aluminum, chromium and stainless steel.

3. The laminated structure for measuring reflected light intensity according to claim 1 or claim 2, wherein the valve metal is a plate or thin film.

4. The laminated structure for measuring reflected light intensity according to any of claims 1 to 3, wherein a passive thin film is formed on the surface of the valve metal by oxidation of the valve metal.

5. The laminated structure for measuring reflected light intensity according to claim 4, wherein the oxidation is anodic oxidation.

6. The laminated structure for measuring reflected light intensity according to claim 4 or claim 5, wherein the film thickness of the passive thin film is 5 nm to 0.1 mm.

7. The laminated structure for measuring reflected light intensity according to any of claims 1 to 6, wherein the thickness of the valve metal is 400 nm to 2 mm.

8. The laminated structure for measuring reflected light intensity according to any of claims 3 to 7, wherein the thin film of the valve metal is formed by deposition or sputtering.

9. The laminated structure for measuring reflected light intensity according to any of claims 3 to 8, wherein the thin film of the valve metal is formed on a metal electrode of a quartz vibrator.

10. The laminated structure for measuring reflected light intensity according to any of claims 4 to 9, wherein a thin film targeted for measurement is further adsorbed on the passive thin film.

11. The laminated structure for measuring reflected light intensity according to claim 10, wherein the thin film targeted for measurement is selected from proteins, nucleic acids, sugar chains, lipids, synthetic polymer compounds and low molecular weight compounds.

12. A method for measuring film thickness and/or mass of a thin film targeted for measurement by radiating light onto the laminated structure for measuring reflected light intensity according to claim 10 or claim 11 installed in a measurement medium and measuring a change in reflected light intensity at at least one wavelength from the laminated structure.

13. A device for measuring reflected light intensity, provided with a laminated structure for measuring reflected light intensity at at least one wavelength comprising a valve metal interference layer, a cell housing the laminated structure for measuring reflected light intensity, a light source, light radiating means for radiating light from the light source onto the laminated structure for measuring reflected light intensity, and detecting means for detecting intensity of light reflected from the laminated structure for measuring reflected light intensity at at least one wavelength.

14. A sensor chip, provided with a laminated structure for measuring reflected light intensity at at least one wavelength comprising a valve metal interference layer and a metal electrode of a quartz vibrator.

15. A quartz vibrator microbalancing device, provided with the sensor chip according to claim 14, an oscillation circuit connected to a metal electrode of the sensor chip, and means for detecting a resonance frequency of a quartz vibrator provided in the sensor chip.

16. A device comprising the combination of the device for measuring reflected light intensity according to claim 13 and the quartz vibrator microbalancing device according to claim 15, wherein the laminated structure for measuring reflected light intensity is used to measure both reflected light intensity at at least one wavelength and quartz vibrator microbalance.

17. A method for measuring viscosity, comprising measuring reflected light intensity at at least one wavelength and measuring quartz vibrator microbalance using a laminated structure for measuring reflected light intensity at at least one wavelength comprising a valve metal interference layer, wherein viscosity of a thin film targeted for measurement on the laminated structure for measuring reflected light intensity is measured based on the relationship between the resulting measured value of reflected light intensity and the measured value of quartz vibrator microbalance.
